# EUROPÄISCHE PATENTSCHRIFT

(11) **EP 0 602 441 B1**
(45) Veröffentlichungstag und Bekanntmachung des Hinweises auf die Patenterteilung: **29.04.1998**
(21) Anmeldenummer: 93119239.7
(22) Anmeldetag: 30.11.1993
(51) Int. Cl.: B27B 33/20, B23D 61/04, B23C 5/06

(54) **Kreissägeblatt**
Circular saw blade
Lame de scie circulaire

(30) Priorität: 18.12.1992 DE 4243024
(43) Veröffentlichungstag der Anmeldung: 22.06.1994
(73) Patentinhaber: Wurster u. Dietz GmbH u. Co. Maschinenfabrik, D-72072 Tübingen (DE)
(72) Erfinder: Dietz, Hans, Dr., D-72119 Ammerbuch (DE)
(74) Vertreter: Witte, Alexander, Dr.-Ing.

(56) Entgegenhaltungen:
- DE-B- 1 145 896
- DE-C- 48 379
- DE-C- 261 186
- GB-A- 416 825
- GB-A- 1 137 275
- US-A- 4 396 315
- US-A- 4 456 045

## Beschreibung

Die Erfindung betrifft ein kegeliges Zerspanerwerkzeug mit Hackmessern zum Anflachen von Baumstämmen mit einem Stirnseiten-Kreissageblatt, das mit einem Stammblatt und mit auf einem Flugkreis angeordneten Zähnen versehen ist, deren Zahnkörper in Umfangsrichtung des Flugkreises eine vorbestimmte Breite aufweisen und voneinander beabstandet angeordnet sind, derart, daß zwischen ihnen Spanräume vorgegebener Breite vorhanden sind und die Zähne am Flugkreis mit von der Breitseite der Zahnkörper vorstehenden Bereichen versehen sind, deren Breite kleiner ist als die Breite der Zahnkörper.

Ein Zerspanerwerkzeug der vorstehend genannten Art ist aus dem DE-GM 1 176 194 bekannt.

Kreissägeblätter, wie sie aus dem vorstehend genannten DE-GM 1 176 194, aber auch aus der DE-PS 31 14 332 oder der DE-PS 30 45 107 bekannt sind, werden als Stirnseiten-Kreissägeblätter an Zerspanerwerkzeugen eingesetzt, wie man sie zum Anflachen von Baumstämmen verwendet. Die Zerspanerwerkzeuge sind hierzu z. B. auf der Mantelfläche eines Kegelstumpfes mit Hackmessern versehen, um so beim Bearbeiten des Baumstamnes aus dem waldkantigen Bereich des unbearbeiteten Baumstammes Hackschnitzel heraushacken. Da sich das Kreissägeblatt am verjüngten, äußeren Ende des Zerspanerwerkzeuges befindet, gelangt es als letztes in Eingriff mit dem Baumstamm und dient im wesentlichen dazu, dem angeflachten Bereich schlußendlich eine gesägte Oberflächengüte zu verleihen.

Bei Zerspanerwerkzeugen der vorstehend genannten Art, aber auch bei Kreissägeblättern allgemein, besteht stets das Problem, daß die vom gesägten Werkstoff, insbesondere Holz, abgenommenen Späne aus dem Bereich der Spanabnahme entfernt werden müssen. Dies gilt umsomehr, je größer die Spanabnahme pro Zeit ist. Insbesondere gilt dies naturgemäß bei Werkzeugen, bei denen in anderen Bereichen ebenfalls große Spanmengen abgenommen werden, wie dies bei den vorstehend erläuterten kegeligen Zerspanerwerkzeugen der Fall ist.

Wenn in derartigen Fällen bei der Konstruktion des Kreissägeblattes die für die Abfuhr der Späne erforderlichen Spanräume zu klein bemessen wurden, so setzt sich das Kreissägeblatt beim Bearbeiten des Werkstoffes mit Spänen zu, mit der Folge, daß das Sägeergebnis negativ beeinträchtigt wurde.

Bei Kreissägeblättern herkömmlicher Bauart gemäß DE-PS 31 14 332 oder DE-PS 30 45 107 wird der Spanraum durch diejenigen Zwischenräume definiert, die Umfangsrichtung des Flugkreises der Zähne zwischen den Zahnkörpern bestehen. Diese Zwischenräume dienen ferner dazu, um Werkzeuge zum Bearbeiten, bspw. zum Nachschleifen der Zähne einführen zu können. Aus Stabilitätsgründen ist es aber nicht möglich, diese Zwischenräume beliebig zu vergrößern und es ist im Interesse eines guten Sägeergebnisses auch nicht möglich, die Zähne auf dem Flugkreis zu weit voneinander zu beabstanden.

Es ist ferner zwar bei Kreissägeblättern und auch bei anderen Sägen allgemein bekannt, die Zähne zu verschränken und/oder im Schneidenbereich verbreitert auszubilden, so daß bspw. bei einem Kreissägeblatt die in Eingriff kommenden Schneiden der Zähne seitlich über die Dicke des Zahnkörpers vorstehen. Dies ändert jedoch nichts daran, daß der Schneidenbereich des Zahnes über die gesamte Dicke des Zahnkörpers oder einen Teil der Dicke radial außerhalb des den Sägezahn tragenden Sägeblattgrundkörpers in Eingriff gelangt und somit Späne im wesentlichen dort entstehen, wo die Zwischenräume in Umfangsrichtung zwischen den Zahnkörpern vorhanden sind.

Aus diesen Gründen ist bei herkömmlichen Kreissägeblättern der Spanraumgröße eine natürliche Grenze gesetzt. Dies schränkt den Einsatzbereich herkömmlicher Kreissägeblätter bei Werkzeugen mit extrem großer Spanabnahme naturgemäß ein, so daß der Spanraum des Kreissägeblattes im ungünstigen Fall das begrenzende Element sein kann, das den Arbeitsbereich eines Gesamtwerkzeuges, bspw. eines kegeligen Zerspanerwerkzeuges, einschränkt.

Bei dem Zerspanerwerkzeug gemäß dem eingangs genannten DE-GM 1 176 194 ist auf die Breitseite des scheibenförmigen Zerspaners seitlich ein Kreissägeblatt aufgesetzt, das an seinem Umfang mit Zähnen versehen ist. Das aufgesetzte Kreissägeblatt besteht dabei aus einem Stammblatt mit an der Peripherie angeordneten zahnförmigen Vorsprüngen, an denen jeweils Schneidplatten befestigt sind. Die Schneidplatten sind jeweils auf die Vorderkante der zahnförmigen Vorsprünge aufgesetzt und in Axialrichtung des Kreissägeblattes etwas dicker ausgebildet als das Stammblatt, indem sie zur Peripherie des Kreissägeblattes hin verdickt verlaufen.

Während des Einsatzes des bekannten Zerspanerwerkzeuges sind die Schneidplatten über ihre gesamte Dicke im Einsatz, so daß auch unmittelbar neben dem scheibenförmigen Zerspanerwerkzeug, d.h. an dessen Oberfläche, Späne anfallen, die den in Flugrichtung hinter den Zähnen angeordneten Spanraum schnell ausfüllen können.

Aus der DE-PS 48 379 ist ein weiteres Kreissägeblatt bekannt, das an seinem Umfang mit rampenförmigen Zahnhaltern versehen ist. Auf die Zahnhalter können Zahnaufsätze unterschiedlichster Formgebung aufgeschoben werden. Bei einer Ausführungsform dieser Zahnaufsätze ist der Zahnhalter mit einer radial vorstehenden Wulst versehen, so daß der Zahnaufsatz sich seitlich und im Abstand vom Stammblatt des Kreissägeblattes befindet.

Bei diesem bekannten Kreissägeblatt ist nichts über den Arbeitsbereich der so gebildeten Zähne bekannt, so daß davon ausgegangen werden muß, daß die Zähne mit den unterschiedlich geformten Zahnaufsätzen über ihre gesamte Außenkontur hin in Eingriff gelangen. Dann kann jedoch die Spanabfuhr unzureichend sein, weil jeder Zahnaufsatz so weit auf den Zahnhalter aufgeschoben wird, daß er sich an seinem rückwärtigen Ende am jeweils nachfolgenden Zahnhalter abstützt.

Aus dem Dokument US-A-44 56 045 ist ein kegeliges Zerspanerwerkzeug bekannt, bei dem die Zähne des Stirnseitenkopfes mit zwei Schneiden versehen sind, nämlich mit einer spanenden Schneide sowie einer Stirnseitenschneide. Die Stirnseitenschneiden führen zunächst einen Schnitt in der Stirnseitenebene aus und danach werden Späne durch die spanenden Schneiden abgetrennt. Der Sinn dieser Maßnahme ist es, oberhalb der von den Spanmessern bereits zerspanten Endebene auch den Zwischenraum zwischen der Endebene und der Stirnseitenebene auszuspanen.

Das Dokument GB-A-11 37 275 beschreibt ein Kreissägeblatt, das zum gleichzeitigen Sägen und Anflachen dient. Dabei werden die Zähne über ihre gesamte axiale Breite wirksam.

Das Dokument DE-C-26 11 86 beschreibt ein Kreissägeblatt, bei dem Hobelmesser im achsnahen Bereich angeordnet sind. Diese Hobelmesser sind radial weit von den Zähnen des Kreissägeblattes beabstandet.

Im Dokument DE-B-11 45 896 ist ein Stirnseitenfräser beschrieben. Bei einem Fräser sind wesentlich weniger Schneiden auf dem Umfang angeordnet als bei einer Kreissäge.

Im Dokument GB-A-416 825 ist ein Kreissägeblatt beschrieben, bei dem die Zähne zu beiden Seiten des Kreissägeblattes axial vorstehen und gesamthaft im Eingriff sind.

Das Dokument DE-C-48 379 beschreibt ein Kreissägeblatt mit auswechselbaren Zähnen. Dabei grenzen die Zähne in Umfangsrichtung unmittelbar aneinander an.

Im Dokument US-A-43 96 315 ist eine Schneidplatte mit vier über den Umfang verteilten Schneiden beschrieben.

Der Erfindung liegt daher die Aufgabe zugrunde, ein Kreissägeblatt der eingangs genannten Art dahingehend weiterzubilden, daß durch Vergrößerung des Spanraums der Einsatzbereich des Kreissägeblattes in Richtung auf eine vergrößerte Spanabnahme bezogen auf den zur Verfügung stehenden Spanraum vergrößert wird und damit auch die Einsatzfähigkeit kombinierter Werkzeuge, bei denen ein Kreissägeblatt ein Werkzeugteil ist, verbessert wird.

Diese Aufgabe wird erfindungsgemäß dadurch gelöst, daß sich die von dem axial benachbarten Hackmesser gebildete Radialebene mit einem ersten axialen Abstand vor der Breitseite des Stammblattes und mit einem zweiten axialen Abstand innerhalb der äußeren Radialebene der Zähne befindet.

Die der Erfindung zugrundeliegende Aufgabe wird auf diese Weise vollkommen gelöst.

Das erfindungsgemäße Kreissägeblatt hat nämlich den Vorteil, daß der Spanraum nicht mehr durch die Zwischenräume in Umfangsrichtung zwischen den Zahnkörpern bestimmt wird. Dadurch, daß die Bereiche in ihrer Breite (in der Seitenansicht des Kreissägeblattes) wesentlich schmaler ausgebildet sind als die Zahnkörper und radial nach innen nicht unmittelbar begrenzt sind, entstehen nämlich zwischen den vorstehenden Bereichen Spanräume mit erheblich größerem Volumen, bspw. dem doppelten oder gar dem mehrfachen Volumen. Dies hat zur Folge, daß die beim Einsatz des Kreissägeblattes abgenommenen Späne wesentlich leichter abgeführt werden können oder, anders ausgedrückt, das Kreissägeblatt für wesentlich höhere Zerspanungsleistungen einsetzbar ist. Damit entfallen auch die Beschränkungen bei Kombinationswerkzeugen, bspw. den erwähnten kegeligen Zerspanerwerkzeugen, weil das am verjüngten Ende des Zerspanerwerkzeuges angebrachte Kreissägeblatt jetzt nicht mehr die begrenzende Größe hinsichtlich der Zerspanerleistung ist. Die Maßnahme, wonach nur ein von der Breitseite beabstandeter Abschnitt begrenzter Dicke des Bereiches als Arbeitsbereich ausgebildet ist, hat dabei den besonderen Vorteil, daß Späne überhaupt nur außerhalb der Dicke des Zahnkörpers und damit des Kreissägeblattkörpers erzeugt werden und somit besonders leicht abgeführt werden können.

Bevorzugt ist, wenn die Zähne an der Peripherie eines Stammblattes eines Kreissägeblattes angeordnet sind und das Stammblatt in die Stirnseite des Zerspanerwerkzeuges eingelassen ist.

Diese Maßnahme hat den Vorteil, daß sich das Stammblatt innerhalb der Spanerebene befindet.

Bei einer weiteren bevorzugten Ausgestaltung der Erfindung ist der Bereich in an sich bekannter Weise als separates Bauteil, insbesondere als Hartmetallschneide ausgebildet, die mit dem Zahnkörper verbunden ist.

Diese Maßnahme, die bei der Herstellung von Kreissägeblättern an sich allgemein bekannt ist, weil bei Hochleistungs-Kreissägeblättern bevorzugt Hartmetallschneiden aufgelötet werden, hat jedoch im vorliegenden Fall den besonderen Vorteil, daß die besondere Formgebung des vorstehenden Bereiches auf verschiedene konstruktive Weise erzeugt werden kann.

So wird bevorzugt bei einer Variante des vorstehend genannten Ausführungsbeispiels die Anordnung so getroffen, daß die Hartmetallschneide sich über die Dicke des Zahnkörpers erstreckt und zusätzlich über dessen Breitseite übersteht. Bei einer anderen Variante des Ausführungsbeispieles bildet die Hartmetallschneide hingegen nur den Bereich und ist seitlich auf der Breitseite befestigt.

Beide Varianten des Ausführungsbeispiels haben damit ihre jeweiligen Vorteile hinsichtlich der Herstellbarkeit, der damit verbundenen Kosten und der Funktion im Einsatz.

Besonders bevorzugt ist, wie bereits eingangs erwähnt, wenn das erfindungsgemäße Kreissägeblatt als Stirnseiten-Kreissägeblatt eines kegeligen Zerspanerwerkzeuges zum Anflachen von Baumstämmen ausgebildet ist und die Bereiche sich von dem kegeligen Abschnitt des Zerspanerwerkzeuges weg erstrecken.

Bei diesem Anwendungsgebiet des erfindungsgemäßen Kreissägeblattes stellen sich die vorstehend genannten Vorteile besonders markant ein.

Weitere Vorteile ergeben sich aus der Beschreibung der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Draufsicht auf eine Anordnung mit zwei kegeligen Zerspanerwerkzeugen im Eingriff an einem Baumstamm;
- Fig. 2: eine Seitenansicht, in stark vergrößertem Maßstab, auf Zähne eines Kreissägeblatts gemäß der vorliegenden Erfindung;
- Fig. 3: eine Ansicht in Richtung III/III von Fig. 2.

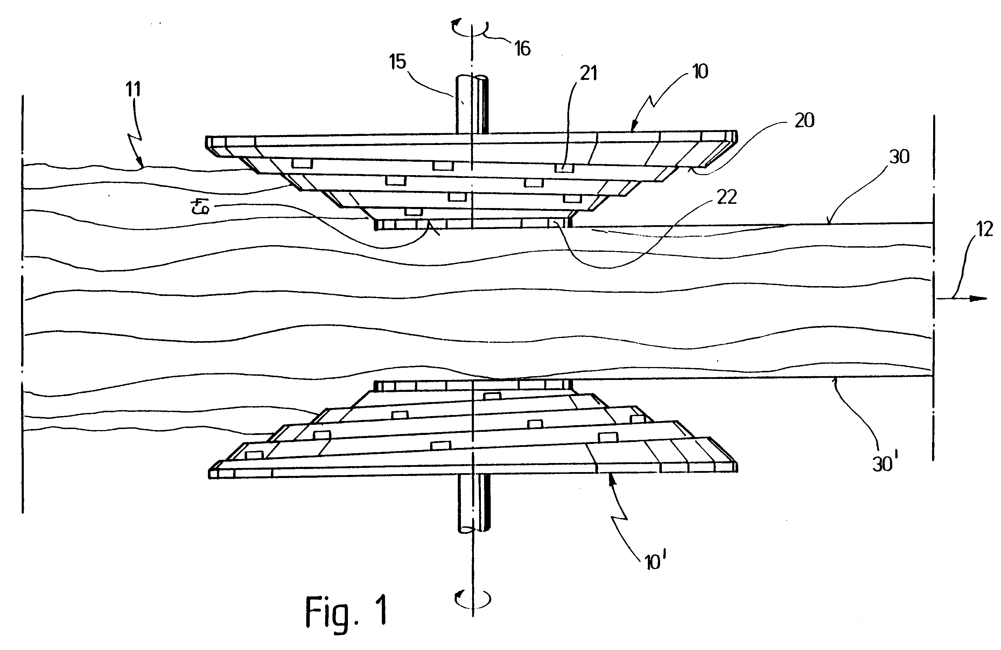

In Fig. 1 ist mit 10 insgesamt ein Zerspanerwerkzeug bezeichnet, von dem jeweils eines 10,10' auf beiden Seiten eines Baumstamms 11 im Einsatz ist, wobei der Baumstamm 11 in Richtung eines Pfeiles 12 relativ zu den raumfestgelagerten Zerspanerwerkzeugen 10,10' bewegt wird.

Das Zerspanerwerkzeug 10 ist mittels einer Welle 15 antreibbar, die in Richtung eines Pfeiles 16 um eine Achse 17 mittels eines nicht dargestellten Antriebes gedreht wird. Das Zerspanerwerkzeug 10 ist von kegeliger Gestalt, wobei auf der kegeligen Oberfläche 20 Hackmesser 21 beabstandet befestigt sind. Vorne an dem verjüngten Ende des kegeligen Zerspanerwerkzeuges 10 ist ein Kreissägeblatt 22 angeordnet.

Wenn der Baumstamm 11 in Richtung des Pfeiles 12 relativ zu den Zerspanerwerkzeugen 10,10' bewegt wird, so gelangen zunächst die Hackmesser 21 auf der kegeligen Oberfläche 20 in Eingriff mit den waldkantigen Oberflächen des Baumstammes 11. Da Hackmesser 21 eine relativ raue Oberfläche erzeugen, gelangen als letztes die Kreissägeblätter 22 der Zerspanerwerkzeuge 10,10' in Eingriff mit dem Baumstamm 11, um auf beiden Seiten 30,30' eine flache Oberfläche hoher Oberflächengüte zu erzeugen.

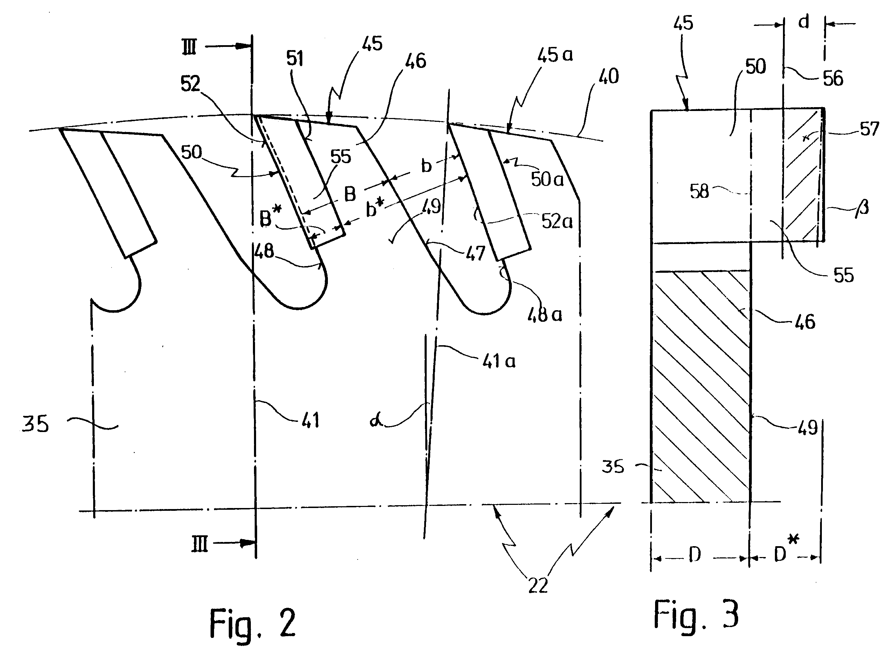

Die in Fig. 1 gezeigte Anordnung ist an sich bekannt, abgesehen von der Ausbildung des Kreissägeblattes 22, die nachstehend anhand der Figuren 2 und 3 näher erläutert werden wird.

In Fig. 2 ist ein Flugkreis 40 des Kreissägeblattes 22 zu erkennen, der die Verbindungslinie der Spitzen der Zähne des Kreissägeblattes 22 darstellt. Mit 41,41a sind Radien des Kreissägeblattes 22 bezeichnet, die jeweils durch die Spitzen der Zähne laufen. Bei bspw. 120 Zähnen auf dem Flugkreis 40 sind die Radien 41,41a... somit um jeweils 3° gegeneinander versetzt. In absoluten Zahlen beträgt der Durchmesser eines Kreissägeblatts 22 der hier interessierenden Art bspw. zwischen 400 und 600 mm.

Mit 45 sind in den Figuren 2 und 3 die Zähne des Kreissägeblattes 22 bezeichnet. Die Zähne 45 befinden sich an der Peripherie eines Stammblattes 35 des gesamten Kreissägeblattes 22. Jeder Zahn 45 besteht aus einem Zahnkörper 46, der üblicherweise einstückig mit dem Grundkörper des Kreissägeblattes 22 ausgebildet ist.

In Fig. 2 und 3 ist mit 47 die Rückseite, mit 48 die Vorderseite (jeweils in Richtung des Flugkreises 40) und mit 49 die Breitseite (in der Seitenansicht der Fig. 2) eines jeden Zahnkörpers 46 bezeichnet. Die Breitseite 49 ist zugleich die Vorderseite des Stammblattes 35. Das Stammblatt 35 befindet sich innerhalb des kegeligen Abschnittes des Spanerwerkzeuges 10 (vgl. Fig. 1, so daß seitlich von Spanerwerkzeug 10 nur die Zähne 45 vorstehen, wie weiter unten noch beschrieben wird. Das Stammblatt 35 befindet sich somit in der Spanerebene. Die Vorderseite 48 jeden Zahnkörpers 46 ist mit einer Hartmetallschneide 50 versehen, in dem die Hartmetallschneide 50 bspw. auf den Zahnkörper 46 aufgelötet ist. Mit 51 ist in Fig. 2 die Rückseite und mit 52 die Vorderseite der Hartmetallschneide 50, wiederum in Richtung des Flugkreises 40, bezeichnet.

Wie man nun deutlich aus Fig. 3 erkennt, ist die Hartmetallschneide so ausgebildet, daß sie in der Darstellung der Fig. 3 nach rechts über die Breitseite 49 und damit über das Stammblatt 35 sowie über den kegeligen Abschnitt des Spanerwerkzeuges 10 vorsteht. Die Anordnung ist dabei so getroffen, daß nur ein Abschnitt des seitlich vorstehenden Bereiches 55, nämlich der Abschnitt rechts der strichpunktierten Linie 56 als Arbeitsbereich 57 der Hartmetallschneide 50 wirkt. Dies bedeutet, daß vom Kreissägeblatt 22 Späne nur im Arbeitsbereich 57, d.h. im seitlichen Abstand vom Grundkörper des Kreissägeblattes 22 erzeugt werden.

Mit 58 ist strichpunktiert die Breitseite 59 in dem Bereich der Hartmetallschneide 50 durchgezeichnet, um zu veranschaulichen, daß die Hartmetallschneide 50 nicht nur, wie in Fig. 3 dargestellt, über die gesamte Dicke des Zahns 45 und zusätzlich den vorstehenden Bereich 55 durchgehen kann, alternativ ist auch möglich, die Hartmetallschneide 50 lediglich seitlich, nämlich rechts von der Linie 58 auf die Breitseite 59 des Zahnkörpers 46 aufzulöten, was im Sinne der Schneideigenschaften gleichwertig ist, da, wie erwähnt, der Arbeitsbereich 57 ohnehin seitlich von der Breitseite 49 des Zahnkörpers 46 beabstandet ist.

In Fig. 2 ist mit B die Breite des Zahnkörpers 46 und mit b die Breite des Zwischenraumes zwischen den Zähnen 45,45a, d.h. der Abstand zwischen der Rückseite 47 und der Vorderseite 48a zweiter nebeneinander angeordneter Zähne 45,45a bezeichnet.

Demgegenüber bezeichnet B* die Breite der Hartmetallschneide 50 im vorstehenden Bereich 55 und b* den Abstand zwischen der Rückseite 51 der Hartmetallschneide 50 des einen Zahns 45 und der Vorderseite 52a der Hartmetallschneide 50a des dahinterliegenden Zahnes 45a.

In Fig. 3 ist mit D die Dicke des herkömmlichen Zahnkörpers 46 bzw. des Stammblattes 35 bezeichnet, während D* die Dicke des vorstehenden Bereiches 55 bezeichnet. Die Dicke des Arbeitsbereiches 57 ist mit d bemessen.

In Fig. 2 ist weiterhin der Winkelversatz zwischen zwei benachbarten Radien 41,41a mit α angegeben und Fig. 3 zeigt schließlich, daß die seitliche Oberfläche des vorstehenden Bereiches 55 um einen Winkel β zur Ebene des Kreissägeblattes 22 geneigt sein kann. Bei dem bereits erwähnten praktischen Ausführungsbeispiel eines Kreissägeblattes mit 400 bis 600 mm Durchmesser können die genannten Größen bspw. wie folgt bemessen werden:
- B: = 6,2 mm
- b: = 6,0 mm
- B*: = 2,6 mm
- b*: = 9,6 mm
- D: = 7,0 mm
- D*: = 5,0 mm
- d: = 3,0 mm
- α: = 3°
- β: = 0,5°

Die Wirkungsweise des Kreissägeblattes 22 mit den Zähnen 45 ist wie folgt:

Bei einem herkömmlichen Kreissägeblatt, bei dem die Hartmetallschneiden oder, allgemeiner ausgedrückt, die oberen, schneidenenden Enden der Zähne nicht seitlich vorstehen, ist der Spanraum durch den Zwischenraum zwischen hintereinander angeordneten Zähnen auf dem Flugkreis bestimmt. Im dargestellten Ausführungsbeispiel entspricht dies der Größe b (von bspw. 6 mm Breite).

Dadurch, daß erfindungsgemäß zum einen der schneidende Bereich der Zähne 45 in Gestalt der Hartmetallschneiden 50 in den vorstehenden Bereich 55 verbreitert ist und dort auch nur im Arbeitsbereich 57 wirksam wird, ist der Spanraum nunmehr durch den Abstand dieser vorstehenden Bereiche 55 voneinander bestimmt. Dies entspricht im dargestellten Ausführungsbeispiel der Größe b* (von bspw. 9,6 mm Breite). Der Spanraum ist daher bereits bei dieser Betrachtung durch die erfindungsgemäßen Maßnahmen um 60 % im genannten Beispielsfall verlängert; darüberhinaus ist aber der Spanraum beim erfindungsgemäßen Kreissägeblatt 22 in seinem wirksamen Volumen zusätzlich noch dadurch vergrößert, daß er zum Zentrum des Kreissägeblattes 22 hin nicht unmittelbar begrenzt ist, anders als bei den Zwischenräumen zwischen den Zahnkörpern 46, die zum Zentrum des Kreissägeblattes 22 hin nur eine endliche Länge aufweisen, wie durch die näherungsweise halbkreisförmigen Abschlüsse in Fig. 2 deutlich zu erkennen ist.

Das erfindungsgemäße Kreissägeblatt 22 ermöglicht damit durch die erheblich vergrößerten Spanräume eine deutliche Steigerung der Zerspanungsleistung, ohne daß ein Zusetzen der Spanräume befürchtet werden muß.

Ferner kann die Größe b beim erfindungsgemäßen Kreissägeblatt 22 unter Gesichtspunkten der Festigkeit der Zahnkörper 46 verringert werden, weil an dieser Stelle kein Spanraum mehr benötigt wird, da die Spanabnahme in den Bereich seitlich vom Kreissägeblatt 22 verlegt worden ist (Lage des Arbeitsbereiches 57). Es ist daher möglich, den Abstand zwischen den Zahnkörpern 46, d.h. die Größe b so gering wie möglich einzustellen, nämlich gerade so gering, wie dies unbedingt erforderlich, um zwischen den Zähnen 45,45a noch ein Werkzeug einführen zu können, mit dem ein Bearbeiten, bspw. ein Nachschleifen der Zähne möglich ist.

## Patentansprüche

1. Kegeliges Zerpanerwerkzeug (10) mit Hackmessern (21) zum Anflachen von Baumstämmen (11) mit einem Stirnseiten-Kreissägeblatt (22), das mit einem Stammblatt (35) und mit auf einem Flugkreis (40) angeordneten Zähnen (45) versehen ist, deren Zahnkörper (46) in Umfangsrichtung des Flugkreises (40) eine vorbestimmte Breite (B) aufweisen und voneinander beabstandet angeordnet sind, derart, daß zwischen ihnen Spanräume vorgegebener Breite (b) vorhanden sind, und die Zähne (45) am Flugkreis (40) mit von der Breitseite (49) der Zahnkörper (46) vorstehenden Bereichen (55) versehen sind, deren Breite (B*) kleiner ist als die Breite (B) der Zahnkörper (46), dadurch gekennzeichnet, daß sich die von dem axial benachbarten Hackmesser (21) gebildete Radialebene (56) mit einem ersten axialen Abstand (D* minus d) vor der Breitseite (49) des Stammblattes (35) und mit einem zweiten axialen Abtand (d) innerhalb der äußeren Radialebene der Zähne (45) befindet.

2. Zerspanerwerkzeug nach Anspruch 1, dadurch gekennzeichnet, daß die Zähne (45) an der Peripherie eines Stammblattes (35) des Kreissägeblattes (22) angeordnet sind.

3. Zerspanerwerkzeug nach Anspruch 2, dadurch gekennzeichnet, daß das Stammblatt (35) in die Stirnseite des Zerspanerwerkzeugs (10) eingelassen ist.

4. Zerspanerwerkzeug nach einem der Ansprüche 1 bis 3, dadurch gekennzeichnet, daß der Bereich (55) als separates Bauteil, insbesondere als Hartmetallschneide (50) ausgebildet ist, die mit dem Zahnkörper (46) verbunden ist.

5. Zerspanerwerkzeug nach Anspruch 4, dadurch gekennzeichnet, daß die Hartmetallschneide (50) sich über die Dicke (D) des Zahnkörpers (46) erstreckt und zusätzlich über dessen Breitseite (49) übersteht.

6. Zerspanerwerkzeug nach Anspruch 4, dadurch gekennzeichnet, daß die Hartmetallschneide nur den Bereich bildet und seitlich (58) auf der Breitseite (49) befestigt ist.

## Claims

1. A conical chipping tool (10) comprising chipping knives for flattening logs (11) and a front side circular saw blade (22), the saw blade (22) being provided with a main blade (35) and with teeth (45) arranged along a circular cutting trajectory (40), the teeth (45) having a tooth body (46) which, when viewed in a peripheral direction of the circular trajectory (40), have a predetermined width (B) and are arranged distant from each other such that there are chip areas of predetermined width (b) between them, the teeth (45) being provided with portions (55) protruding at the circular trajectory from the broad side (49) of the tooth bodies (46), the portions having a width (B*) being smaller than the width (B) of the tooth bodies (46), characterized in that the radial plane (56) defined by the axially neighboured chipping knife (21) is located at a first axial distance (D* minus d) in front of the broad side (49) of the main blade (35) and at a second axial distance (d) within the outer radial plane of the teeth (45).

2. The chipping tool of claim 1, characterized in that the teeth (45) are arranged at the periphery of a main blade (35) of the circular saw blade (22).

3. The chipping tool of claim 2, characterized in that the main blade (35) is embedded in the front side of the chipping tool (10).

4. The chipping tool of any of claims 1 to 3, characterized in that the portion (55) is configured as a separate component, in particular as a carbide cutting edge (50) being connected to the tooth body (46).

5. The chipping tool of claim 4, characterized in that the carbide cutting edge (50) extends over the thickness (D) of the tooth body (46) and, additionally, extends over the broad side (49) of the latter.

6. The chipping tool of claim 4, characterized in that the carbide cutting edge constitutes the portion only and is affixed laterally (58) to the broad side (49).

## Revendications

1. Outil d'enlèvement de copeaux conique (10) comportant des couperets (21) destinés à aplanir des troncs d'arbres (11), comportant une lame de scie circulaire frontale (22), qui est pourvue d'une lame de base (35) et de dents (45), disposées sur une trajectoire circulaire (40), dont les corps de dents (46) présentent une largeur (B) prédéterminée, dans la direction périphérique de la trajectoire circulaire (40) et sont espacés les uns des autres, de manière qu'entre eux existent des espaces pour copeaux de largeur (b) donnée, les dents (45) sur la trajectoire circulaire (40) étant pourvues de zones (55), dépassant du côté large (49) des corps de dents (46), dont la largeur (B*) est inférieure à la largeur (B) des corps de dents (46), caractérisé en ce que le plan radial (56), formé par le couperet (21) axialement voisin, se trouve, à une première distance axiale (D* moins d) devant le côté large (49) de la lame de base (35) et à une deuxième distance axiale (d), à l'intérieur du plan radial extérieur des dents (45).

2. Outil d'enlèvement de copeaux selon la revendication 1, caractérisé en ce que les dents (45) sont disposées à la périphérie d'une lame de base (35) de la lame de scie circulaire (22).

3. Outil d'enlèvement de copeaux selon la revendication 2, caractérisé en ce que la lame de base (35) est encastrée dans le côté frontal de l'outil d'enlèvement de copeaux (10).

4. Outil d'enlèvement de copeaux selon l'une des revendications 1 à 3, caractérisé en ce que la zone (55) est réalisée en tant que composant séparé, en particulier en tant que lame en métal dur (50), qui est reliée au corps de dent (46).

5. Outil d'enlèvement de copeaux selon la revendication 4, caractérisé en ce que la lame en métal dur (50) s'étend sur l'épaisseur (D) du corps de dent (46) et dépasse en supplément de son côté large (49).

6. Outil d'enlèvement de copeaux selon la revendication 4, caractérisé en ce que la lame en métal dur ne forme que ladite zone et est fixée latéralement (58) sur le côté large (49).
